# EUROPÄISCHE PATENTSCHRIFT

(11) **EP 0 387 667 B1**
(45) Veröffentlichungstag und Bekanntmachung des Hinweises auf die Patenterteilung: **17.08.1994**
(21) Anmeldenummer: 90104273.9
(22) Anmeldetag: 06.03.1990
(51) Int. Cl.: H04Q 11/04, H04Q 3/545

(54) **Schaltungsanordung für zentralgesteuerte Zeitmultiplex-Fernsprechvermittlungsanlagen mit zentralem Koppelfeld und dezentralen Anschlussgruppen**
Circuit arrangement for centrally controlled time-division telephone exchanges with a centralized switching network and decentralized connexion groups
Circuit pour centraux téléphoniques à division dans le temps à commande centrale comprenant un réseau de commutation central et des groups de connexion décentralisés

(30) Priorität: 17.03.1989 DE 3908895
(43) Veröffentlichungstag der Anmeldung: 19.09.1990
(73) Patentinhaber: SIEMENS AKTIENGESELLSCHAFT, 80333 München (DE)
(72) Erfinder: Krumenacker, Rudolf, Dipl.-Ing., D-8000 München 21 (DE); Nagler, Werner, Dipl.-Ing., D-8021 Schäftlarn (DE); Kaderka, Rostislav, Dipl.-Ing., D-8034 Germering (DE)

(56) Entgegenhaltungen:
- EP-A- 0 039 077
- EP-A- 0 291 791
- FR-A- 2 156 965
- FR-A- 2 180 171
- US-A- 4 771 420
- PATENT ABSTRACTS OF JAPAN, vol. 10, no. 99 (E-396)(2156) 16. April 1986 & JP-A-60 241 396 ( NIPPON DENSHIN DENWA )

## Beschreibung

Die Erfindung bezieht sich auf eine Schaltungsanordnung für zentralgesteuerte Zeitmultiplex-Fernsprechvermittlungsanlagen, in denen ein der Verbindungsdurchschaltung dienendes zentrales Koppelfeld samt einem dessen Steuerung dienenden zentralen Prozessor vorgesehen ist, und in denen eine Mehrzahl von dezentralen Anschlußgruppen mit je einem als Zeitstufe ausgebildeten Teilkoppelfeld zum außenseitigen Anschluß von Verbindungs- und/oder Teilnehmerleitungenund zum innenseitigen Anschluß von zu Koppelfeldanschlüssen des zentralen Koppelfeldes führenden Linkverbindungswegen und mit je einer dezentralen Steuereinrichtung zur Schaltkennzeichenaufnahme von den genannten Leitungen, zur Schaltkennzeichenvorverarbeitung sowie zur Schaltkennzeichenweiterleitung an den zentralen Prozessor und zur Schaltkennzeichenaussendung auf diese Leitungen ausgestattet ist, und in denen die Anschlußgruppen je zu zweit einander paarweise zugeordnet sind, und in denen innerhalb jeder derselben einerseits zum außenseitigen Anschluß der Teilnehmer- und/oder Verbindungs-Leitungen dienende und innerhalb der jeweiligen Anschlußgruppe primär mit ihrem Teilkoppelfeld verbundene Anschlußeinheiten, z.B. Teilnehmeranschlußleitungen, Mehrfachteilnehmeranschlußschaltungen, Verbindungsleitungs(-mehrfach-)abschlußschaltungen und dergleichen, einerseits sowie zum innenseitigen Anschluß der Linkverbindungswege individuell dienende und ebenfalls primär innerhalb der betreffenden Anschlußgruppe mit ihrem Teilkoppelfeld verbundene Linkanschlußschaltungen andererseits zusätzlich einerseits außenseitig und andererseits innenseitig mit dem Teilkoppelfeld der jeweils anderen, also einer jeweils zweiten (Partner-)Anschlußgruppe verbindbar sind - und umgekehrt - woraufhin bei einem sich vom Separat-Betrieb der betreffenden beiden Anschlußgruppen unterscheidenden Umschaltebetrieb für Verbindungen, die jeweils über eine Anschlußeinheit sowie eine Linkanschlußschaltung der ersten - bzw. zweiten - Anschlußgruppe und über das Teilkoppelfeld der anderen Anschlußgruppe verlaufen, die entsprechende Schaltkennzeichenbearbeitung (sowie Teilkoppelfeld-Einstellung) ebenfalls von deren dezentraler Steuereinrichtung mit Hilfe von verbindungsindividuell belegbaren Schaltgliedern, z.B. Wahlkennzeichenempfängern, Wahlkennzeichensendern, Rufsignalsendern und Hörzeichensendern, durchgeführt wird.

Eine Schaltungsanordnung dieser Art ist bereits durch die deutsche Offenlegungsschrift 3 717 387 bekannt. In einer Vermittlungsanlage dieser Art sind also die Anschlußgruppen immer paarweise einander zugeordnet. Im erwähnten Umschaltebetrieb jeweils einer Anschlußgruppe sind deren obige Anschlußeinheiten und deren obige Linkanschlußschaltungen jeweils zum Teilkoppelfeld der betreffenden Partner-Anschlußgruppe umschaltbar. Über dieses wird dann aushilfsweise der Vermittlungsbetrieb auch für diejenige der beiden einander zugeordneten Anschlußgruppen abgewickelt, die sich derzeit im Umschaltebetrieb befindet.

Für die Verbindungsherstellung gibt es u.a. eine Mehrzahl von verbindungsindividuell belegbaren Schaltgliedern, die u.a. dem Wahlkennzeichenempfang und der Hörton-Signalgabe und weiteren Zwecken (s.o.!) dienen. In diesem Zusammenhang sind Wahlkennzeichenempfänger und Hörtongeber allgemein bekannt. Sie sind - wie erwähnt - verbindungsindividuell belegbar.

Für die Erfindung besteht die Aufgabe, im Hinblick aud den erwähnten Umschaltebetrieb, für den das Teilkoppelfeld jeder der beiden Anschlußgruppen ohnehin bereits gedoppelt vorgesehen sein muß, nicht auch noch die erwähnten verbindungsindividuell belegbaren Schaltglieder, wie z.B. Wahlkennzeichenempfänger und Hörtongeber, in doppelter Anzahl vorsehen zu müssen. Verbindungsindividuell belegbare Schaltglieder können darüber hinaus Konferenz-Verbindungssätze, Prüf-Sätze und dergleichen sein. Es sollen diese verbindungsindividuell belegbaren Schaltglieder jeweils einer Anschlußgruppe mitausgenutzt werden, wenn die jeweils andere Anschlußgruppe, also die entsprechende Partner-Anschlußgruppe, sich im Umschalte-Betrieb befindet.

Die Erfindung löst die ihr gestellte Aufgabe dadurch, daß das Teilkoppelfeld pro Anschlußgruppe außer einem ersten Paar von Zeitlagenkoppelvielfachen,
an das eingangsseitig außer den der betreffenden Anschlußgruppe zugeordneten Anschlußeinheiten und Linkanschlußschaltungen auch die verbindungsindividuell belegbaren schaltglieder angeschlossen sind,
ein zweites Paar von Zeitlagenkoppelvielfachen aufweist,
an das eingangsseitig nur die der betreffenden Partner-Anschlußgruppe zugeordneten Anschlußeinheiten und Linkanschlußschaltungen, aber keine der genannten Schaltglieder angeschlossen sind,
und daß kanalindividuelle Teilinformationen zweifach, und zwar parallel in jedes der beiden Teilkoppelfelder je eines Paares zeitlagengleich eingeschrieben werden,
und daß von jedem Paar von Zeitlagenkoppelvielfachen
je eines ausgangsseitig mit den Anschlußeinheiten und Linkanschlußschaltungen der betreffenden Anschlußgruppe sowie mit deren verbindungsindividuell belegbaren Schaltgliedern verbunden ist und beim Lesen der Teilinformationen von einem ihr zugeordneten ersten Haltespeicher zeitlagengerecht gesteuert wird
und je ein anderes ausgangsseitig nur mit den Anschlußeinheiten und Linkanschlußschaltungen der betreffenden Partner-Anschlußgruppe verbunden ist und beim Lesen der Teilinformationen von einem ihr zugeordneten zweiten haltespeicher zeitlagengerecht gesteuert wird, wobei jeder
der beiden Haltespeicher die zeitlagenindividuellen Lesevorgänge jeweils so steuert, daß pro Zeitlage eine entsprechende Teilinformation entweder aus dem einen oder aus dem anderen der betreffenden beiden Teilkoppelfelder gelesen wird.

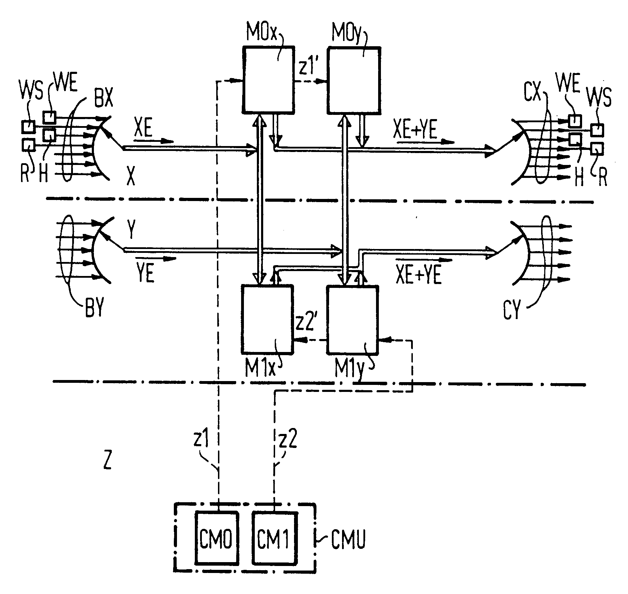

In der Zeichnung ist ein Ausführungsbeispiel der Erfindung dargestellt, auf welches die Erfindung jedoch keineswegs beschränkt ist.

Bei der nachfolgenden Beschreibung des genannten Ausführungsbeispiels wird davon ausgegangen, daß Schaltungsanordnungen für zentralgesteuerte Zeitmultiplex-Fernsprechvermittlungsanlagen bereits allgemein bekannt sind. Hierzu sei auf die Zeitschrift "telecom report", 4. Jahrgang (1981), Beiheft "Digitalvermittlungssystem EWFD" hingewiesen. Ferner sind folgende deutsche Offenlegungsschriften in diesem Zusammenhang zu erwähnen: 3 607 903, 3 622 369 und 3 717 387. Außerdem ist auf die deutsche Offenlegungsschrift 3 733 765 hinzuweisen. In diesen Offenlegungsschriften sind Schaltungsanordnungen für zentralgesteuerte Zeitmultiplex-Fernsprechvermittlungsanlagen beschrieben, in denen ein der Verbindungsdurchschaltung dienendes zentrales Koppelfeld samt einem dessen Steuerung dienenden zentralen Prozessor vorgesehen ist, und in denen eine Mehrzahl von dezentralen Anschlußgruppen mit je einem als Zeitstufe ausgebildeten Teilkoppelfeld zum außenseitigen Anschluß von Verbindungs- und/oder Teilnehmerleitungen und zum innenseitigen Anschluß von zu Koppelfeldanschlüssen des zentralen Koppelfeldes führenden Linkverbindungswegen und mit je einer dezentralen Steuereinrichtung zur Schaltkennzeichenaufnahme von den genannten Leitungen, zur Schaltkennzeichenvorverarbeitung sowie zur Schaltkennzeichenweiterleitung an den zentralen Prozessor und zur Schaltkennzeichenaussendung auf diese leitungen ausgestattet ist, und in denen die Anschlußgruppen je zu zweit einander paarweise zugeordnet sind, und in denen innerhalb jeder derselben einerseits zum außenseitigen Anschluß der Teilnehmer- und/oder Verbindungs-Leitungen dienende und innerhalb der jeweiligen Anschlußgruppe primär mit ihrem Teilkoppelfeld verbundene Anschlußeinheiten, z.B. Teilnehmeranschlußleitungen, Mehrfachteilnehmeranschlußschaltungen, Verbindungsleitungs(-mehrfach-)abschlußschaltungen u.dgl., einerseits sowie zum innenseitigen Anschluß der Linkverbindungswege individuell dienende und ebenfalls primär innerhalb der betreffenden Anschlußgruppe mit ihrem Teilkoppelfeld verbundene Linkanschlußschaltungen andererseits zusützlich einerseits außenseitig und andererseits innenseitig mit dem Teilkoppelfeld der jeweils anderen, also einer jeweils zweiten (Partner-) Anschlußgruppe verbindbar sind - und ungekehrt - , woraufhin bei einem sich vom Separat-Betrieb der betreffenden beiden Anschlußgruppen unterscheidenden Umschaltebetrieb für Verbindungen, die jeweils über eine Anschlußeinheit sowie eine Linkanschlußschaltung der ersten - bzw. zweiten - Anschlußgruppe und über das Teilkoppelfeld der anderen Anschlußgruppe verlaufen, die entsprechende Schaltkennzeichenbearbeitung (sowie Teilkoppelfeld-Einstellung) ebenfalls von deren dezentraler Steuereinrichtung mit Hilfe von verbindungsindividuell belegbaren Schaltgliedern, z.B. Wahlkennzeichenenpfängern, Wahlkennzeichensendern, Rufsignalsendern und Hörzeichensendern, durchgeführt wird. Die weitere Beschreibung geht davon aus, daß Schaltungsanordnungen dieser Art dem Fachmann bekannt sind.

Wie sich der zuvor genannten Offenlegungsschrift 3 717 387 entnehmen läßt, ist in jeder Anschlußgruppe ein Teilkoppelfeld vorhanden. Die Anschlußgruppen sind paarweise einander zugeordnet. Die genannten Anschlußeinheiten einerseits und Linkanschlußschaltungen andererseits, die primär mit dem Teilkoppelfeld jeweils derselben Anschlußgruppe verbunden sind, sind in dem sich von Separat-Betrieb (Normalzustand der betreffenden Fernsprechvermittlungsanlage) der betreffenden beiden Anschlußgruppen unterscheidenden Umschaltebetrieb verbindbar mit dem Teilkoppelfeld der jeweiligen Partner-Anschlußgruppe. Hierzu ist jedes der beiden Teilkoppelfelder jeder der beiden Anschlußgruppen so aufgebaut, daß jeweils die betreffenden Anschlußeinheiten und die jeweils betreffenden Linkanschlußschaltungen im umgeschalteten Zustand Anschlußmöglichkeiten am Teilkoppelfeld der jeweiligen Partner-Anschlußgruppe in ausreichender Zahl vorfinden. Dies betrifft die Anzahl der verbindungsindividuell belegbaren Kanäle. Die genannte Anzahl betrifft also diese Kanäle. Ein Teilkoppelfeld in einer Anschlußgruppe bietet also Anschlußmöglichkeiten sowohl für die anschlußgruppeneigenen Anschlußeinheiten und Linkanschlußschaltungen als auch für die Anschlußeinheiten und Linkanschlußschaltungen der jeweiligen Partner-Anschlußgruppe, und zwar für den Fall, daß sich diese im Umschaltebetrieb befindet. Das Teilkoppelfeld in jeder der Anschlußgruppen enthält demgemäß einen X-Teil zum Anschluß der anschlußgruppeneigenen Anschlußeinheiten und Linkanschlußschaltungen, sowie einen Y-Teil zum Anschluß der Anschlußeinheiten und Linkanschlußschaltungen der jeweiligen Partner-Anschlußgruppe. Dies gilt für jede der beiden Anschlußgruppen, die jeweils einander paarweise zugeordnet sind.

In der Zeichnung ist nun das Teilkoppelfeld einer Anschlußgruppe dargestellt. Es weist einen X-Teil, einen Y-Teil und einen Z-Teil auf. Letzterer dient zur Steuerung und enthält hierzu u.a. einen Haltespeicher CMU. Der X-Teil dient - wie angegeben - zum Anschluß jeweils der anschlußgruppen-eigenen Anschlußeinheiten und Linkanschlußschaltungen, während der Y-Teil zum Anschluß der Anschlußeinheiten und Linkanschlußschaltungen jeweils der Partner-Anschlußgruppe dient.

Es ist eine Anzahl von zeitlagenmäßig ineinander verschachtelten Kanälen Bx für ankommende Nachrichtenübertragungsrichtung dargestellt, sowie entsprechende Kanäle CX mit zeitlagenmäßiger Zuordnung für abgehende Nachrichtenübertragungsrichtung.

Bekanntlich ist für jede Nachrichtenverbindung jeweils ein Kanalpaar erforderlich und zwar je ein Übertragungskanal für die eine Nachrichtenübertragungsrichtung und je ein kanal für die andere Nachrichtenübertragungsrichtung. Demgemäß gehört zu einem Kanalpaar, das verbindungsindividuell belegt werden kann, ein Kanal bei BX und ein Kanal bei CX. Ist ein Kanalpaar über das Teilkoppelfeld mit einem anderen Kanalpaar zu verbinden, so wird jeweils der Kanal bei BX des einen Kanalpaars mit einem Kanal bei CX des anderen Kanalpaars - und umgekehrt - zeitmultiplextechnisch verbunden. Dies geschieht in grundsätzlich an sich bekannter Weise (vgl. DE-OS 3 100 811) mit Hilfe von Sprachspeichern, die mit Hilfe von Haltespeichern gesteuert werden. Das in der genannten Offenlegungsschrift 3 717 387 dargestellte Teilkoppelfeld (z.B. GS1), welches dort mit zwei Anschlußseiten symbolisch dargestellt ist, und zwar einerseits für die Anschlußeinheiten und andererseits für die Linkanschlußschaltungen ist gemäß vorliegendem Ausführungsbeispiel also so ausgebildet, daß alle Anschlußmöglichkeiten (also die in der letztgenannten deutschen Offenlegungsschrift einerseits linksseitigen und andererseits rechtsseitigen) untereinander gleich sind. Jede der Anschlußmöglichkeiten ist realisiert durch ein verbindungsindividuell belegbares Kanalpaar, wobei jedes Kanalpaar einen Kanal für die eine Übertragungsrichtung und einen Kanal für die entgegengesetzte Übertragungsrichtung enthält. Die Kanäle unterscheiden sich in bekannter Weise zeitlagenmäßig voneinander.

Wie in der Zeichnung dargestellt ist, werden die zeitlagenmäßig sich voneinander unterscheidenden Kanäle bei BX einzeln nacheinander zeitlagengerecht abgetastet. Die zeitlagenmäßig festgeleg ten kanalindividuellen Teilinformationen (verbindungsindividuelle PCM-Wörter), die über die einzelnen Kanäle bei BX eintreffen, werden im X-Teil auf dem gemeinsamen Nachrichtenweg XE zeitlagenmäßig ineinander verschachtelt zwei Sprachspeichern M0x und M1x zugeführt und in zeitlagenmäßiger Ordnung in diesen beiden Sprachspeichern eingeschrieben. Die beiden Sprachspeicher M0x und M1x bilden also ein Paar von Zeitlagenkoppelvielfachen, wobei der Sprachspeicher M0x zum X-Teil und der Sprachspeicher M1x dem Y-Teil angehört. Diese Sprachspeicher bilden ein erstes Paar von Zeitlagenkoppelvielfachen, an das eingangsseitig außer den der betreffenden Anschlußgruppe zugeordneten Anschlußeinheiten und Linkanschlußschaltungen auch verbindungsindividuell belegbare Schaltglieder angeschlossen sind. Letztere setzen sich jeweils aus einer Mehrzahl von Wahlkennzeichenempfängern WE, von Wahlkennzeichensendern WS, von Rufsignalsendern R und von Hörzeichensendern H zusammen. Alle diese verbindungsindividuell belegbaren Schaltglieder sind jeweils mehrfach vorgesehen. Sie sind in die zeitlagenmäßige Zuordnung der Kanäle des betreffenden Zeitvielfaches bei BX einbezogen. Außerdem gehören zu den Kanälen BX solche, die mit den Anschlußeinheiten und Linkanschlußschaltungen der eigenen Anschlußgruppe verbunden sind (s.o.!). Entsprechendes gilt für die Kanäle bei CX der vom betreffenden Teilkoppelfeld abgehenden Nachrichtenübertragungsrichtung.

Das Teilkoppelfeld einer Anschlußgruppe enthält noch ein zweites Paar von Zeitlagenkoppelvielfachen, die durch die Sprachspeicher M0y und M1y realisiert sind. An dieses zweite Paar von Zeitlagenkoppelvielfachen sind hinsichtlich der Übertragungsrichtung eingangsseitig nur die der betreffenden Partner-Anschlußgruppe zugeordneten Anschlußeinheiten und Linkanschlußschaltungen, aber keine der genannten verbindungsindividuell belegbaren Schaltglieder angeschlossen; d.h. angeschlossen sind Zeitmultiplex-Verbindungswege, mit denen im genannten Umschaltebetrieb die Anschlußeinheiten und Linkanschlußschaltungen der jeweiligen Partner-Anschlußgruppe verbindbar sind.

Kanalindividuelle Teilinformationen (verbindungsindividuelle PCM-Wörter) sind nun zweifach, und zwar parallel, in jedes der beiden Teilkoppelfelder je eines Paares von Teilkoppelfeldern zeitlagengleich einschreibbar. Eine Teilinformation, die also z.B. über den Übertragungsweg XE übertragen wird, ist also sowohl in den Sprachspeicher M0x als auch in den Sprachspeicher M1x einschreibbar, und zwar zeitlagengleich. Ebenso gelangt eine Teilinformation, die über den Übertragungsweg YE übertragen wird, sowohl in den Sprachspeicher M1y als auch in den Sprachspeicher M0y. Hierzu sind an die beiden Zeitlagenkoppelvielfache des ersten Paares eingangsseitig - d.h. hinsichtlich der Nachrichtenübertragungsrichtung eingangsseitig - die der betreffenden Anschlußgruppe zugeordneten Anschlußeinheiten und Linkanschlußsmaltungen sowie die verbindungsindividuell belegbaren Schaltglieder zeitmultiplextechnisch angeschlossen; ebenso sind an die beiden Zeitlagenkoppelvielfache des zweiten Paares eingangsseitig nur die der betreffenden Partner-Anschlußgruppe zugeordneten Anschlußeinheiten und Linkanschlußschaltungen zeitmultiplextechnisch angeschlossen.

Von jedem Paar von Zeitlagenkoppelvielfachen, z.B. von dem Paar M0x/M1x, ist je eines, z.B. M0x ausgangsseitig - d.h. hinsichtlich der Nachrichten-Übertragungsrichtung ausgangsseitig - mit den Anschlußeinheiten und Linkanschlußschaltungen der betreffenden Anschlußgruppe verbunden, sowie mit den genannten verbindungsindividuell belegbaren Schaltgliedern. Wie aus der Zeichnung zu erkennen ist, ist also ein Paar von Sprachspeichern M0x/M1x und ein zweites Paar von Sprachspeichern M0y/M1y vorgesehen. Von jedem paar ist je ein erster Sprachspeicher, z.B. M0x und M0y, mit den Anschlußeinheiten der eigenen Anschlußgruppe zeitmultiplextechnisch verbunden.

Von jedem der enanten beiden Paare ist je ein anderer, zweiter Sprachspeicher, z.B. M1x und M1y, mit den Anschlußeinheiten und Linkanschlußschaltungen der betreffeden Partner-Anschlußgruppe verbunden; diese Verbindungen werden in der Situation des Umschaltebetriebs aktualisiert (vgl. DE-OS 3 717 387).

Beim Lesen der Teilinformationen werden nun aus jedem der beiden Paare die genannten ersten Sprachspeicher M0x und M0y von einem dieser Anschlußgruppe zugeordneten ersten Haltespeicher CM0 zeitlagengerecht gesteuert. Ebenso werden auch die beiden anderen Sprachspeicher beim Lesen der Teilinformationen von einem dieser Anschlußgruppe zugeordneten zweiten Haltespeicher CM1 zeitlagengerecht gesteuert. Dies geschieht über Steuerleitungen z1 und z2 bzw. z+z1′ und z+z2′. Hierbei steuert jeder der beiden Haltespeicher CM0 und CM1 die zeitlagenindividuellen Lesevorgänge jeweils so, daß pro Zeitlage eine entsprechende Teilinformation entweder aus dem einen oder aus dem anderen der betreffenden beiden Sprachspeicher gelesen wird. Steuert also z.B. der haltespeicher CM0 einen Lesevorgang, so bewirkt er hierbei, daß zeitlagengerecht das betreffende PCM-Wort entweder aus dem Sprachspeicher M0x oder aus dem Sprachspeicher M0y gelesen wird.

An den X-Teil des Teilkoppelfeldes sind also die Kanäle angeschlossen, die von und zu den Anschlußeinheiten und den Linkanschlußschaltungen der eigenen Anschlußgruppe führen. Ebenfalls sind die genannten verbindungsindividuell belegbaren Schaltglieder an den X-Teil des Koppelfeldes angeschlossen. An den Y-Teil sind dagegen die Kanäle angeschlossen, die von und zu den Anschlußeinheiten und Linkanschlußschaltungen der Partner-Anschlußgruppe führen.

Durch die zuvor im einzelnen erläuterte Anordnung der Sprachspeicher paarweise und je zweifach pro Sprachspeicherpaar ist eine Durchschaltung von PCM-Informationen zwischen dem X-Teil und dem Y-Teil in beiden Nachrichtenübertragungsrichtungen uneingeschränkt möglich. Das Auslesen aus den Sprachspeichern M0x bzw. M0y und M1x bzw. M1y wird durch Einstellungen der getrennten haltespeicher CM0 und CM1 in der beschriebenen Weise gesteuert. Der Haltespeicher CM0 steuert die Sprachspeicher M0x und M0y und der Haltespeicher CM1 steuert beim Lesen die Sprachspeicher M1x und M1y. Der Lesevorgang erfolgt ähnlich wie der Schreibvorgang zeitlagengerecht, und zwar je nach der in dem betreffenden Haltespeicher gespeicherten Verbindungsinformation entweder in dem einen Sprachspeicher, z.B. M0x, oder in dem anderen Sprachspeicher M0y (bzw. M1x oder M1y).

## Patentansprüche

1. Schaltungsanordnung für zentralgesteuerte Zeitmultiplex-Fernsprechvermittlungsanlagen, in denen ein der Verbindungsdurchschaltung dienendes zentrales Koppelfeld samt einem dessen Steuerung dienenden zentralen Prozessor vorgesehen ist, und in denen eine Mehrzahl von dezentralen Anschlußgruppen mit je einem als Zeitstufe ausgebildeten Teilkoppelfeld zum außenseitigen Anschluß von Verbindungs- und/oder Teilnehmerleitungen und zum innenseitigen Anschluß von zu koppelfeldanschlüssen des zentralen Koppelfeldes führenden Linkverbindungswegen und mit je einer dezentralen Steuereinrichtung zur Schaltkennzeichenaufnahme von den genannten Leitungen, zur Schaltkennzeichenvorverarbeitung sowie zur Schaltkennzeichenweiterleitung an den zentralen Prozessor und zur Schaltkennzeichenaussendung auf diese Leitungen ausgestattet ist, und in denen die Anschlußgruppen je zu zweit einander paarweise zugeordnet sind, und in denen innerhalb jeder derselben einerseits zum außenseitigen Anschluß der Teilnehmer-und/oder Verbindungs-Leitungen dienende und innerhalb der jeweiligen Anschlußgruppe primär mit ihrem Teilkoppelfeld verbundene Anschlußeinheiten, z.B. Teilnehmeranschlußleitungen, Mehrfachteilnehmeranschlußschaltungen, Verbindungsleitungs(-mehrfach-) abschlußschaltungen u.dgl., einerseits sowie zum innenseitigen Anschluß der Linkverbindungswege individuell dienende und ebenfalls primär innerhalb der betreffenden Anschlußgruppe mit ihrem Teilkoppelfeld verbundene Linkanschlußschaltungen andererseits zusätzlich einerseits außenseitig und andererseits innenseitig mit dem Teilkoppelfeld der jeweils anderen, also einer jeweils zweiten (Partner-)Anschlußgruppe verbindbar sind -um umgekehrt - , woraufhin bei einem sich vom Separat-Betrieb der betreffenden beiden Anschlußgruppen unterscheidenden Umschaltebetrieb für Verbindungen, die jeweils über eine Anschlußeinheit sowie eine Linkanschlußschaltung der ersten -bzw. zweiten- Anschlußgruppe und über das Teilkoppelfeld der anderen Anschlußgruppe verlaufen, die entsprechende Schaltkennzeichenbearbeitung (sowie Teilkoppelfeld-Einstellung) ebenfalls von deren dezentraler Steuereinrichtung mit Hilfe von verbindungsindividuell belegbahren Schaltgliedern, z.B. Wahlkennzeichenemfängern, Wahlkennzeichensendern, Rufsignalsendern und Hörzeichensendern, durchgeführt wird, **dadurch gekennzeichnet,**
daß das Teilkoppelfeld pro Anschlußgruppe außer einem ersten Paar von Zeitlagenkoppelvielfachen (M0̸x, M1x),
an das eingangsseitig außer den der betreffenden Anschußgruppe zugeordneten Anschlußeinheiten und Linkanschlußschaltungen auch die verbindungsindividuell belegbaren Schaltglieder angeschlossen sind,
ein zweites Paar von Zeitlagenkoppelvielfachen (M0̸y, M1y) aufweist, an das eingangsseitig nur die der betreffenden Partner-Anschlußgruppe zugeordneten Anschlußeinheiten und Linkanschlußschaltungen, aber keine der genannten Schaltglieder angeschlossen sind,
und daß kanalindividuelle Teilinformationen zweifach, und zwar parallel in jedes der beiden Teilkoppelfelder je eines Paares zeitlagengleich eingeschrieben werden,
und daß von jedem Paar von Zeitlagenkoppelvielfachen
je eines (M0̸x, M0̸y) ausgangsseitig mit den Anschlußeinheiten und Linkanschlußschaltungen der betreffenden Anschlußgruppe sowie mit deren verbindungsindividuell belegbaren Schaltgliedern verbunden ist und beim Lesen der Teilinformationen von einem ihr zugeordneten ersten haltespeicher (CM0̸) zeitlagengerecht gesteuert wird
und je ein anderes (M1x, M1y) ausgangsseitig nur mit den Anschlußeinheiten und Linkanschlußschaltungen der betreffenden Partner-Anschlußgruppe verbunden ist und beim Lesen der Teilinformationen von einem ihr zugeordneten zweiten Haltespeicher (CM1) zeitlagengerecht gesteuert wird,
wobei jeder der beiden Haltespeicher die zeitlagenindividuellen Lesevorgänge jeweils so steuert, daß pro Zeitlage eine entsprechende Teilinformation entweder aus dem einen oder aus dem anderen der betreffenden beiden Teilkoppelfelder gelesen wird.

## Claims

1. Circuit arrangement for centrally controlled time-division multiplex telephone exchanges, in which a central switching network used for switching through connections, and a central processor used for controlling the latter, are provided and in which a plurality of decentralized line trunk groups is equipped with in each case one group switch, constructed as time division multiplex stage, for the external connection of connecting and/or subscriber lines and for the internal connection of link connection paths leading to switching network terminals of the central switching network and with in each case a decentralized control device for receiving switching signals from the said lines, for preprocessing switching signals and for forwarding switching signals to the central processor and for transmitting switching signals onto these lines, and in which in each case the line trunk groups are allocated to one another in pairs, and in which, within each of these, on the one hand, line units serving for external connection of the subscriber and/or link lines and primarily connected to their group switch within the respective line trunk group, for example subscriber lines, multiple subscriber line circuits, link line (multiple) terminating circuits and the like, and, on the one hand, link access units individually serving for internal connection of the link connection paths and also primarily connected to their group switch within the respective line trunk group can be additionally connected, on the one hand externally and, on the other hand, internally to the group switch of the in each case other line trunk group, that is to say an in each case a second (partner) line trunk group, and conversely, whereupon during a changeover mode, differing from separate operation of the relevant two line trunk groups, for connections which in each case extend via a line unit and a link access circuit of the first and respectively second line trunk group and via the group switch of the other line trunk group, the corresponding switching signal processing (and group switch adjustment) is also carried out by their decentralized control device with the aid of connection-individually seizable switching elements, for example by dial code receivers, by dial code transmitters, ringing signal transmitters and call progress tone transmitters, characterized in that the group switch for each line trunk group exhibits, apart from a first pair of time division multiplexers (M0x, M1x), to the input of which, in addition to the line units and link access circuits allocated to the relevant line trunk group, the connection-individually seizable switching elements are also connected,
a second pair of time division multiplexers (M0y, M1y), to the input of which only the line units and link access circuits allocated to the relevant partner line trunk group but none of the said switching elements are connected, and that channel-individual information components are written doubly in parallel into each of the two group switches of in each case one pair in the same time slot, and that of each pair of time division multiplexers, one each (M0x, M0y) is in each case connected at the output to the line units and link access circuits of the relevant line trunk group and to their connection-individually seizable switching elements and is controlled in the correct time slot by an associated first latch (CM0) allocated to it during the reading of the information components, and in each case another one (M1x, M1y) is only connected at its output end to the line units and link access circuits of the relevant partner line trunk group and is controlled in the correct time slot by an associated second latch (CM1) allocated to it during the reading of the information components, each of the two latches controlling the time-slot-individual reading processes in each case in such a manner that a corresponding information component is read either out of one or out of the other one of the relevant two group switches for each time slot.

## Revendications

1. Montage pour des installations de commutation téléphonique, dans lesquelles il est prévu un réseau central de connexion, qui est destiné à établir des liaisons et qui comprend un processeur central destiné à le commander, et dans lesquelles plusieurs groupes décentralisés de raccordement sont chacun pourvus d'un réseau partiel de connexion, qui a la forme d'un étage temporel, qui est destiné à raccorder de façon extérieure des lignes de connexion et/ou d'abonnés, et à raccorder de façon interne des voies d'acheminement menant à des raccordements du réseau central de connexion, et sont pourvus chacun d'une installation décentralisée de commande destinée à recevoir des signaux de commutation desdites lignes, à les prétraiter ainsi qu'à les retransmettre au processeur central et à les émettre sur ces lignes, dans lesquelles les groupes de raccordement sont chacun associés par couple, et dans lesquelles à l'intérieur de chacune de celles identiques, d'une part des unités de raccordement qui servent au raccordement externe des lignes d'abonné et/ou de connexion, qui sont reliées à l'intérieur du groupe de raccordement respectif élémentairement à leur réseau de connexion partielle, qui sont par exemple des lignes de raccordement d'abonné, des circuits de raccordement multiple d'abonné, des circuits terminaux (multiples) de ligne de connexion et ceux analogues, et d'autre part des circuits d'acheminement, qui servent aussi au raccordement intérieur individuel des voies d'acheminement, et qui sont liés également de façon élémentaire à leur réseau de connexion partiel à l'intérieur du groupe concerné de raccordement, peuvent en plus être reliés d'une part à l'extérieur et d'autre part à l'intérieur au réseau de connexion partiel de respectivement l'autre, donc d'un deuxième groupe (associé) de raccordement et inversement, le traitement des signaux de commutation (ainsi que le réglage du réseau de connexion partiel), qui correspond au cas d'un fonctionnement en commutation se distinguant du fonctionnement séparé des deux groupes de raccordement concernés pour des liaisons, qui s'effectuent respectivement par l'intermédiaire d'une unité de raccordement ainsi que par l'intermédiaire d'un circuit d'acheminement du premier ou deuxième groupe de raccordement et par l'intermédiaire du réseau de connexion partiel de l'autre groupe de raccordement, étant également mis en oeuvre par son installation décentralisée de commande à l'aide d'éléments de contact, qui peuvent être occupés individuellement par des connexions, et qui sont par exemple des récepteurs de signaux de sélection, des émetteurs de signaux de sélection, des émetteurs de signaux d'appel et des émetteurs de signaux sonores,
caractérisé en ce que,
le réseau de connexion partiel comprend pour chaque groupe de raccordement outre un premier couple de matrices (M0x, M1x) de commutation par intervalle de temps,
auquel sont également connectés côté entrée outre des circuits d'acheminement et des unités de raccordement associés au groupe de raccordement concerné, les éléments de contact, qui peuvent être occupés individuellement par des liaisons,
un deuxième couple de matrices (M0y, M1y) de commutation par intervalle de temps, auquel ne sont connectés côté entrée que les circuits d'acheminement et les unités de raccordement associés au groupe de raccordement concerné associé, mais aucun desdits éléments de contact,
et on enregistre des informations partielles par canal en double, et aussi en parallèle dans chacun des deux réseaux parties de connexion pour chacun des couples dans le même intervalle de temps,
et parmi chaque couple de matrices de commutation par intervalle de temps,
chacune (M0x, M0y) est reliée côté sortie aux unités de raccordement et circuits d'acheminement du groupe concerné de raccordement ainsi qu'à leurs éléments de contact pouvant être occupés individuellement par des connexions et est commandée dans l'intervalle de temps qui convient lors de la lecture des informations partielles par une première mémoire (CM0) de maintien qui leur est associée
et chacun des autres (M1x, M1y) n'est reliée côté sortie, qu'avec les unités de raccordement et circuits d'acheminement du groupe de raccordement associé concerné et est commandée dans l'intervalle de temps qui convient lors de la lecture des informations partielles par une deuxième mémoire (CM1) de maintien, qui leur est associée,
chacune des deux mémoires de maintien commandant les opérations de lecture pour chaque intervalle de temps, de sorte que pour chaque intervalle de temps, on lise une information partielle correspondante soit à partir de l'un des deux réseaux de connexion parties concernés, soit à partir de l'autre.
